# FASCICULE DE BREVET EUROPEEN

(11) **EP 2 896 872 B1**
(45) Date de publication et mention de la délivrance du brevet: **05.12.2018**
(21) Numéro de dépôt: 14189609.2
(22) Date de dépôt: 21.10.2014
(51) Int. Cl.: F17C 7/02

(54) **Station et procédé de fourniture d'un fluide carburant inflammable cryogénique**
Tankstelle und Verfahren zur Versorgung mit entzündlichem tiefkaltem Treibstoff
Station and process for distributing inflammable cryogenic fuel

(30) Priorité: 21.01.2014 FR 1450457
(43) Date de publication de la demande: 22.07.2015
(73) Titulaire: Cryolor, 57365 Ennery (FR)
(72) Inventeur: Varrassi, Lucien, 57890 Porcelette (FR)
(74) Mandataire: De Cuenca, Emmanuel Jaime

(56) Documents cités:
- EP-A1- 2 613 109
- EP-A2- 1 770 326
- DE-A1-102010 020 476
- DE-U1-202010 012 886
- US-A- 3 098 362
- US-A- 5 415 001

## Description

La présente invention concerne une station de fourniture d'un fluide carburant inflammable ainsi qu'un procédé de stockage.

L'invention concerne plus particulièrement une station de fourniture d'un fluide carburant inflammable, la station comprenant un premier réservoir cryogénique pour stocker du carburant inflammable sous la forme d'un liquide cryogénique, un second réservoir cryogénique de stockage d'un gaz inerte stocké sous forme de liquide cryogénique, un circuit de refroidissement en échange thermique avec le premier réservoir, le circuit de refroidissement comprenant une extrémité amont reliée au second réservoir cryogénique pour prélever du fluide cryogénique dans le second réservoir cryogénique en vue de céder des frigories du fluide du second réservoir cryogénique vers le premier réservoir, la station comprenant un circuit de soutirage de fluide du second réservoir.

Le stockage d'un liquide cryogénique dans un réservoir isolé sous vide est sujet à une remontée de sa pression interne. En effet, en l'absence de soutirage de liquide régulier, les entrées de chaleur par les supports du réservoir, les tuyauteries et l'isolation réchauffent le vide inter-parois. Du liquide se vaporise dans le réservoir et de ce fait la pression va augmenter jusqu'à l'ouverture d'une soupape de sécurité.

Le dégazage de gaz tels l'azote, l'oxygène et l'argon ne pose pas trop de problème cependant, lorsque le gaz stocké est inflammable (gaz naturel, hydrogène...) un tel dégazage risque de créer un nuage explosif donc une « zone ATEX ».

Une solution connue consiste à condenser dans le réservoir une partie de la phase gazeuse ou à refroidir le liquide pour éviter sa vaporisation (cf. le document DE19903214).

Cette solution ne permet cependant pas un contrôle précis de la pression ou de la température dans le réservoir de carburant.

Le document DE202010012886U1 décrit un réservoir de gaz naturel liquéfié refroidi par, d'une part, un premier circuit de refroidissement muni d'un échangeur logé dans le réservoir et faisant circuler un fluide de refroidissement et, d'autre part, un circuit d'injection de fluide froid dans un réservoir via une conduite d'injection munie de buses d'injection de gaz naturel reliquéfié.

Un but de la présente invention est de pallier tout ou partie des inconvénients de l'art antérieur relevés ci-dessus.

A cette fin, la station selon l'invention, par ailleurs conforme à la définition générique qu'en donne le préambule ci-dessus, est essentiellement caractérisée en ce que le circuit de refroidissement comprend deux conduites comprenant une extrémité amont reliée au second réservoir, les deux conduites étant munies chacune d'un échangeur respectif logé dans le premier réservoir, les deux échangeurs étant situés respectivement dans les partie supérieure et inférieure du premier réservoir.

Par ailleurs, des modes de réalisation de l'invention peuvent comporter l'une ou plusieurs des caractéristiques suivantes :
- le circuit de soutirage de fluide du second réservoir est relié fluidiquement au circuit de refroidissement et alimenté en fluide issu de ce dernier,
- les premier et second réservoirs sont des réservoirs cryogéniques à double parois avec vide inter-parois,
- les premier et second réservoirs sont logés dans une enveloppe extérieure commune sous vide,
- le second réservoir est disposé au-dessus du premier réservoir,
- le premier réservoir contient un carburant parmi : du gaz naturel, de l'hydrogène,
- le second réservoir contient un gaz parmi : de l'azote, de l'argon,
- le circuit de soutirage comporte une cheminée munie d'un clapet formant un évent en cas de surpression déterminée au sein dudit circuit,
   Selon d'autres modes de réalisations possibles :
- la station comprend au moins un détecteur de fuite de carburant du premier réservoir et au moins un organe piloté d'ouverture d'une portion du circuit de soutirage, le au moins un organe d'ouverture étant commandé automatiquement en réponse à une détection de fuite par le au moins détecteur pour relâcher du fluide issu du second réservoir cryogénique de façon à inerter un volume au sein de la station,
- le détecteur de fuite comprend au moins l'un parmi : un capteur de carburant, une sonde catalytique, un capteur chimique, un capteur de type optique,
- le au moins un organe d'ouverture comprend au moins l'un parmi : un robinet, une vanne, une buse de pulvérisation.
- le au moins un organe d'ouverture est espacé du premier réservoir d'une distance comprise zéro mètre et cinq mètres et de préférence entre zéro et deux mètres,
- la station contient une armoire de commande regroupant des organes fonctionnels de commande de la station, le au moins organe d'ouverture comportant une extrémité qui débouche au moins en partie dans ladite armoire,
- la station comprend deux organes d'ouvertures distincts espacés,
- la station comprend deux organes d'ouvertures situés respectivement sur deux portions distincte du circuit de soutirage reliées respectivement au deux conduites distinctes du circuit de refroidissement munies des échangeurs.

L'invention concerne également un procédé de stockage d'un fluide carburant inflammable dans une station de remplissage comprenant un premier réservoir cryogénique stockant du carburant inflammable sous la forme d'un liquide cryogénique, un second réservoir cryogénique stockant un gaz inerte à une température inférieure à la température du fluide contenu dans le premier réservoir, la station comprenant un circuit de refroidissement en échange thermique avec le premier réservoir, le circuit de refroidissement comprenant une extrémité amont reliée au second réservoir cryogénique, le procédé comprenant une étape de soutirage de fluide cryogénique du second réservoir cryogénique, une étape d'échange thermique entre ce fluide soutiré et le fluide contenu dans le second réservoir cryogénique pour réduire ou supprimer la vaporisation du fluide dans le premier réservoir, le procédé comportant une étape de contrôle de la pression et/ou de la température dans le premier réservoir en répartissant le fluide soutiré dans le second réservoir dans des échangeurs disposé respectivement dans les parties haute et basses du premier réservoir.

Selon d'autres particularités possibles :
- les fluides soutirés du second réservoir et répartis dans les deux échangeurs situés en partie haute et basse sont distincts, c'est-à-dire que le fluide qui circule dans un des deux échangeurs provient directement du second réservoir sans passer auparavant dans l'autre échangeur.

L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :
- la figure 1 représente une vue en coupe, schématique et partielle illustrant un premier exemple de réalisation d'une station de fourniture de carburant non couvert par les revendications,
- la figure 2 représente une vue en coupe, schématique et partielle, illustrant un second exemple de réalisation d'une station de fourniture de carburant selon l'invention.

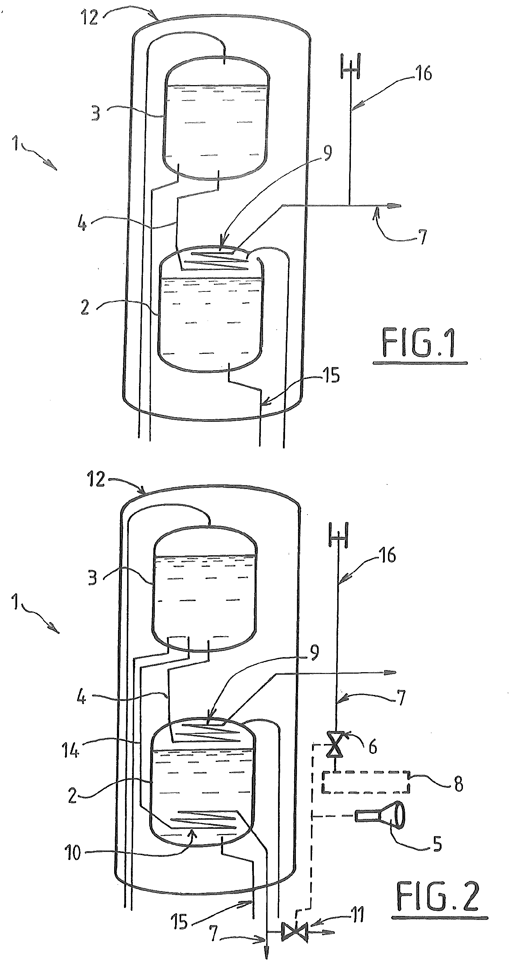

La station 1 illustrée à la figure 1 est une station de fourniture d'un fluide carburant inflammable, par exemple du gaz naturel à partir d'un premier réservoir 2 cryogénique stockant le carburant inflammable sous la forme d'un liquide cryogénique (par exemple à -140°C). Plus précisément, le premier réservoir 2 contient un mélange diphasique liquide/gaz.

La station 1 comprend un second réservoir 3 cryogénique de stockage d'un gaz non inflammable et notamment un gaz inerte tel que de l'azote stocké à une température de -196°C.

Le gaz inerte est également stocké sous forme de liquide cryogénique (mélange diphasique liquide/gaz).

Les premier 2 et second 3 réservoirs sont de préférence des réservoirs cryogéniques à double parois avec vide inter-parois.

La station 1 comprend un circuit 15 de soutirage de fluide du premier réservoir 3. Ce circuit 15 comprend par exemple une conduite de fourniture de carburant liquide vers un utilisateur, par exemple pour remplir des capacités ou des réservoirs de véhicules. Alternativement ou en combinaison, le liquide soutiré peut être fourni à une unité de vaporisation pour alimenter un utilisateur en gaz.

La station 1 comprend un circuit 4 de refroidissement en échange thermique avec le premier réservoir 2 et notamment avec le fluide à l'intérieur du premier 2 réservoir. Le circuit 4 de refroidissement comprend deux conduites ayant une extrémité amont reliée au second réservoir 3 cryogénique pour prélever du fluide cryogénique dans le second réservoir 3 cryogénique.

Dans l'exemple illustré les deux conduites 4, 14 possèdent des extrémités amont (reliées au second réservoir 3) distinctes. Bien entendu, il est possible d'envisager une commune pour le raccordement au second réservoir 3.

Les deux conduites 4, 14 du circuit 4 de refroidissement comprennent chacune, en aval, une portion 9, 10 en échange thermique avec l'intérieur du premier réservoir 2 en vue de céder des frigories du fluide du second réservoir 3 cryogénique vers le premier réservoir 2. Ces portions 9 d'échange thermique comprennent par exemple un serpentin, un condenseur ou tout type d'échangeur approprié.

De plus, les deux échangeurs 9, 10 logés à l'intérieur du premier réservoir 2 sont situés respectivement en partie supérieure et inférieure du premier réservoir 2 pour refroidir respectivement le parties gazeuse et liquide du carburant.

Cet agencement permet de répartir le fluide de refroidissement issu du second réservoir 3 dans le premier 9 et/ou dans le second échangeur 10 pour refroidir sélectivement la partie gazeuse et/ou la partie liquide du fluide du premier réservoir 2. Le contrôle de la pression et du refroidissement de ce fluide carburant est ainsi amélioré.

En aval de chaque échangeur 9, 10, chaque conduite 4, 14 de refroidissement peut comporter une conduite 7 de fourniture de fluide de refroidissement réchauffé à un utilisateur (sous forme gazeuse et/ou liquide).

Ainsi, la partie aval 7 du circuit de refroidissement peut former un circuit de soutirage de fluide du second réservoir 3. C'est-à-dire que le circuit 7 de soutirage est relié au circuit 4 de refroidissement et alimenté en fluide inerte issu de ce dernier.

Le circuit 37 de soutirage peut notamment comporter une ou plusieurs extrémités aval de distribution alimentée(s) en fluide directement à partir du second réservoir 3 ou via l'une ou les deux conduites 4, 14 du circuit de refroidissement.

C'est-à-dire que le circuit 7 de soutirage peut posséder une conduite alimentée en fluide issu du second réservoir 3 par l'une des conduites 4, 14 du circuit de refroidissement. Le circuit 7 de soutirage peut posséder une seconde conduite distincte alimentée en fluide issu du second réservoir 3 via l'autre conduite 14, 4 du circuit de refroidissement.

C'est-à-dire que la ou les conduites du circuit 7 de soutirage sont alimentées en fluide issu initialement du second réservoir 3, après le passage du fluide dans le circuit de refroidissement (dans l'une ou les conduites 4, 14 munies d'un échangeur de chaleur logé dans le premier réservoir 2).

Le circuit de soutirage peut notamment comporter une conduite comprenant une extrémité aval de distribution reliée en amont à l'un ou aux deux conduites 4, 14 du circuit de refroidissement.

Ce circuit 7 de soutirage peut comporter une cheminée 16 munie d'un clapet formant un évent en cas de surpression déterminée.

La figure 2 illustre un exemple possible de réalisation de l'invention qui se distingue de la figure 1 uniquement en ce que la station comprend un système de détection de fuite et de protection contre l'incendie.

Les éléments identiques à ceux décrits précédemment sont désignés par les mêmes références numériques et ne sont pas décrits une seconde fois.

Ainsi, dans le mode de réalisation de la figure 2, la station 1 comprend un détecteur 5 de fuite de carburant du premier réservoir 2. Le détecteur 5 de fuite comprend par exemple au moins l'un parmi : un capteur de carburant (notamment un capteur de gaz naturel), une sonde catalytique, un capteur chimique, un capteur de type optique, ou tout autre système approprié.

De plus, la station comprend deux organes 6, 11 pilotés d'ouverture d'une portion du circuit 4, 7 de refroidissement/soutirage. Les deux organes 6, 11 d'ouvertures distincts sont de préférence espacés et alimentés respectivement par les deux conduites 4, 14. Les deux organes 6 d'ouverture sont commandés automatiquement en réponse à une détection de fuite par le détecteur 5 pour relâcher du fluide issu du second réservoir 3 cryogénique de façon à inerter un volume au sein de la station.

Les organes 6, 11 d'ouverture peuvent comprend au moins l'un parmi : un robinet, une vanne, une buse de pulvérisation ou tout autre dispositif approprié permettant de libérer du gaz inerte dans une zone déterminée en réponse à une détection de fuite de carburant.

Par exemple, l'un au moins des organes 6, 11 d'ouverture est espacé du premier réservoir 2 d'une distance comprise zéro mètre et cinq mètres et de préférence entre zéro et deux mètres, pour inerter la zone directement adjacente au premier réservoir 2. En variante, l'un des organes 6, 11 d'ouverture est situé à distance, pour inerter une zone plus éloignée, par exemple entre deux et dix mètre si la fuite est susceptible de s'y produire et constitue une zone à risque. Les deux organes 6, 11 d'ouverture peuvent ainsi déboucher dans des zones distinctes ou communes de la station.

Dans le cas où la station comprend une armoire 8 de commande regroupant des organes fonctionnels de commande de la station (vannes, électronique de commande, afficheurs...) l'un au moins des organes 6, 11 d'ouverture peut comporter une extrémité qui débouche au moins en partie dans ladite armoire 8 en vue de la protéger d'un incendie.

Comme illustré aux figures et sans ce soit limitatif pour autant, de façon avantageuse mais non impérative, les enveloppes délimitant les volumes de stockage des premier 2 et second 3 réservoirs peuvent être logées dans une enveloppe 12 extérieure commune sous vide. C'est-à-dire que les premier 2 et second 3 réservoirs isolés sous vide contenant des fluides respectifs à des températures distinctes partagent la même enveloppe extérieure et le même vide inter-parois.

Bien entendu, l'invention n'est pas limitée aux exemples ci-dessus, par exemple, la station peut ne comporter qu'un seul ou trois ou plus de trois organes d'ouverture.

On conçoit donc aisément que tout en étant de structure simple et peu coûteuse, la station 1 permet d'utiliser efficacement le fluide de refroidissement du réservoir de carburant pour sécuriser la station en cas de fuite de carburant. La station peut être fixe ou mobile (montée sur une remorque ou un véhicule).

## Revendications

1. Station de fourniture d'un fluide carburant inflammable, la station (1) comprenant un premier réservoir (2) cryogénique pour stocker du carburant inflammable sous la forme d'un liquide cryogénique, un second réservoir (3) cryogénique de stockage d'un gaz inerte stocké sous forme de liquide cryogénique, un circuit (4, 14) de refroidissement comprenant au moins un échangeur (9, 10) de chaleur en échange thermique avec le premier réservoir (2), le circuit (4, 14) de refroidissement comprenant au moins une extrémité amont reliée au second réservoir (3) cryogénique pour prélever du fluide cryogénique dans le second réservoir (3) cryogénique en vue de céder des frigories du fluide du second réservoir (3) cryogénique vers le premier réservoir (2), la station comprenant un circuit (7) de soutirage de fluide issu du second réservoir (3), **caractérisée en ce que** le circuit de refroidissement comprend deux conduites (4, 14) comprenant chacune une extrémité amont reliée au second réservoir (3), les deux conduites (4, 14) étant munies chacune d'un échangeur (9, 10) de chaleur respectif logé dans le premier réservoir (2), les deux échangeurs (9, 10) étant situés respectivement dans les partie supérieure et inférieure du premier réservoir (2).

2. Station selon la revendication 1, **caractérisée en ce que** le circuit (7) de soutirage de fluide du second réservoir (3) est relié fluidiquement au circuit (4, 14) de refroidissement et alimenté en fluide issu de ce dernier.

3. Station selon l'une quelconque des revendications 1 à 2, **caractérisée en ce que** les premier (2) et second (3) réservoirs sont des réservoirs cryogéniques à double parois avec vide inter-parois.

4. Station selon la revendication 3, **caractérisée en ce que** les premier (2) et second (3) réservoirs sont logés dans une enveloppe (12) extérieure commune sous vide.

5. Station selon l'une quelconque des revendications 1 à 4, **caractérisée en ce que** le second réservoir (3) est disposé au-dessus du premier réservoir (2).

6. Station selon l'une quelconque des revendications 1 à 5, **caractérisée en ce que** le premier réservoir (2) contient un carburant parmi : du gaz naturel, de l'hydrogène.

7. Station selon l'une quelconque des revendications 1 à 6, **caractérisée en ce que** le second réservoir (2) contient un gaz parmi : de l'azote, de l'argon.

8. Station selon l'une quelconque des revendications 1 à 7, **caractérisée en ce que** le circuit (7) de soutirage de fluide issu du second réservoir (3) comprend une partie au moins du circuit de refroidissement et notamment l'une (14) des conduites munies d'un échangeur (10) de chaleur, c'est-à-dire que le circuit (7) de soutirage est alimenté en fluide par ladite conduite (7) du circuit (4, 14) de redroidissement.

9. Station selon l'une quelconque des revendications 1 à 7, **caractérisée en ce que** le circuit (7) de soutirage comporte une cheminée (16) munie d'un clapet formant un évent en cas de surpression déterminée au sein dudit circuit (7).

10. Procédé de stockage d'un fluide carburant inflammable dans une station de remplissage comprenant un premier réservoir (2) cryogénique stockant du carburant inflammable sous la forme d'un liquide cryogénique, un second réservoir (3) cryogénique stockant un gaz inerte à une température inférieure à la température du fluide contenu dans le premier réservoir (2), la station comprenant un circuit (4, 14) de refroidissement en échange thermique avec le premier réservoir (2), le circuit (4, 14) de refroidissement comprenant une extrémité amont reliée au second réservoir (3) cryogénique, le procédé comprenant une étape de soutirage de fluide cryogénique du second réservoir (3) cryogénique, une étape d'échange thermique entre ce fluide soutiré et le fluide contenu dans le premier réservoir (2) cryogénique pour réduire ou supprimer la vaporisation du fluide dans le premier réservoir (2), le procédé étant **caractérisé en ce qu'**il comporte une étape de contrôle de la pression et/ou de la température dans le premier réservoir (2) en répartissant le fluide soutiré dans le second réservoir (3) dans des échangeurs (9, 10) disposé respectivement dans les parties haute et basses du premier réservoir.

11. Procédé selon la revendication 10, **caractérisé en ce que** les fluides soutirés du second réservoir (3) et répartis dans les deux échangeurs (9, 10) situés en partie haute et basse sont distincts, c'est-à-dire que le fluide qui circule dans un des deux échangeurs (9, 10) provient directement du second réservoir (3) sans passer auparavant dans l'autre échangeur (10, 9).

## Patentansprüche

1. Station zur Abgabe eines entzündlichen Kraftstoff-Fluids, wobei die Station (1) einen ersten Kryobehälter (2) zum Lagern des entzündlichen Kraftstoffs in der Form einer kryogenen Flüssigkeit umfasst, einen zweiten Kryobehälter (3) zum Lagern eines inerten Gases, das in Form einer kryogenen Flüssigkeit gelagert wird, einen Kühlkreis (4, 14), der mindestens einen Wärmeaustauscher (9, 10) umfasst, der mit dem ersten Behälter (2) in Wärmeaustausch steht, wobei der Kühlkreis (4, 14) mindestens ein stromaufwärtiges Ende umfasst, das mit dem zweiten Kryobehälter (3) verbunden ist, um kryogene Flüssigkeit im zweiten Kryobehälter (3) in Hinblick darauf zu entnehmen, Frigorien des Fluids des zweiten Kryobehälters (3) an den ersten Behälter (2) abzugeben, wobei die Station einen Entnahmekreis (7) für aus dem zweiten Behälter (3) stammendes Fluid umfasst, **dadurch gekennzeichnet, dass** der Kühlkreis zwei Leitungen (4, 14) umfasst, die jede ein stromaufwärtiges Ende, das mit dem zweiten Behälter (3) verbunden ist, umfassen, wobei die zwei Leitungen (4, 14) jede mit einem jeweiligen Wärmeaustauscher (9, 10) ausgestattet sind, der im ersten Behälter (2) untergebracht ist, wobei die zwei Austauscher (9, 10) jeweils im oberen und unteren Teil des ersten Behälters (2) liegen.

2. Station nach Anspruch 1, **dadurch gekennzeichnet, dass** der Entnahmekreis (7) für Fluid des zweiten Behälters (3) fluidisch mit dem Kühlkreis (4, 14) verbunden ist und mit Fluid gespeist wird, das aus diesem letzteren stammt.

3. Station nach einem der Ansprüche 1 bis 2, **dadurch gekennzeichnet, dass** der erste (2) und zweite (3) Behälter doppelwandige Kryobehälter mit Zwischenwandvakuum sind.

4. Station nach Anspruch 3, **dadurch gekennzeichnet, dass** der erste (2) und zweite (3) Behälter in einem gemeinsamen Außenmantel (12) unter Vakuum untergebracht sind.

5. Station nach einem der Ansprüche 1 bis 4, **dadurch gekennzeichnet, dass** der zweite Behälter (3) oberhalb des ersten Behälters (2) angeordnet ist.

6. Station nach einem der Ansprüche 1 bis 5, **dadurch gekennzeichnet, dass** der erste Behälter (2) einen Kraftstoff enthält aus: Erdgas, Wasserstoff.

7. Station nach einem der Ansprüche 1 bis 6, **dadurch gekennzeichnet, dass** der zweite Behälter (2) ein Gas enthält aus: Stickstoff, Argon.

8. Station nach einem der Ansprüche 1 bis 7, **dadurch gekennzeichnet, dass** der Entnahmekreis (7) für Fluid, das aus dem zweiten Behälter (3) stammt, mindestens einen Teil des Kühlkreises und insbesondere eine (14) der Leitungen umfasst, die mit einem Wärmeaustauscher (10) ausgestattet sind, das heißt dass der Entnahmekreis (7) über die Leitung (7) des Kühlkreises (4, 14) mit Fluid gespeist wird.

9. Station nach einem der Ansprüche 1 bis 7, **dadurch gekennzeichnet, dass** der Entnahmekreis (7) einen Schacht (16) aufweist, der mit einer Klappe ausgestattet ist, die im Falle eines bestimmten Überdrucks innerhalb des Kreises (7) eine Entlüftung bildet.

10. Verfahren zum Lagern eines entzündlichen Kraftstoff-Fluids in einer Füllstation, die einen ersten Kryobehälter (2) umfasst, der entzündlichen Kraftstoff in der Form einer kryogenen Flüssigkeit lagert, einen zweiten Kryobehälter (3), der ein inertes Gas bei einer Temperatur lagert, die niedriger ist, als die Temperatur des im ersten Behälter (2) enthaltenen Fluids, wobei die Station einen Kühlkreis (4, 14) umfasst, der mit dem ersten Behälter (2) in Wärmeaustausch steht, wobei der Kühlkreis (4, 14) ein stromaufwärtiges Ende umfasst, das mit dem zweiten Kryobehälter (3) verbunden ist, wobei das Verfahren einen Schritt der Entnahme von kryogener Flüssigkeit aus dem zweiten Kryobehälter (3), einen Schritt des Wärmeaustausches zwischen diesem entnommenen Fluid und dem im ersten Kryobehälter (2) enthaltenen Fluid umfasst, um das Verdampfen des Fluids im ersten Behälter (2) zu verringern oder zu unterdrücken, wobei das Verfahren **dadurch gekennzeichnet ist, dass** es einen Schritt des Steuerns des Drucks und/oder der Temperatur im ersten Behälter (2) durch Verteilen des entnommenen Fluids im zweiten Behälter (3) in Austauschern (9, 10) aufweist, die jeweils im oberen und unteren Teil des ersten Behälters angeordnet sind.

11. Verfahren nach Anspruch 10, **dadurch gekennzeichnet, dass** die aus dem zweiten Behälter (3) entnommenen und in den zwei im oberen und unteren Teil liegenden Austauschern (9, 10) verteilten Fluide getrennt sind, das heißt, dass das Fluid, das in einem der zwei Austauscher (9, 10) zirkuliert, direkt aus dem zweiten Behälter (3) kommt, ohne zuvor in den anderen Austauscher (10, 9) zu laufen.

## Claims

1. Station for supplying a flammable fuel fluid, the station (1) comprising a first cryogenic tank (2) for storing flammable fuel in the form of a cryogenic liquid, a second cryogenic tank (3) for storing an inert gas stored in the form of a cryogenic liquid, a cooling circuit (4, 14) comprising at least one heat exchanger (9, 10) in thermal exchange with the first tank (2), the cooling circuit (4, 14) comprising at least one upstream end connected to the second cryogenic tank (3) in order to take cryogenic fluid in the second cryogenic tank (3) for the purpose of transferring frigories of the fluid from the second cryogenic tank (3) to the first tank (2), the station comprising a circuit for withdrawing (7) the fluid from the second tank (3), **characterised in that** the cooling circuit comprises two pipes (4, 14) with each one comprising an upstream end connected to the second tank (3), the two pipes (4, 14) each being provided with a respective heat exchanger (9, 10) housed in the first tank (2), the two exchangers (9, 10) being located respectively in the upper and lower portion of the first tank (2).

2. Station according to claim 1, **characterised in that** the circuit for withdrawing (7) the fluid from the second tank (3) is fluidically connected to the cooling circuit (4, 14) and supplied with fluid coming from the latter.

3. Station according to any of claims 1 to 2, **characterised in that** the first (2) and second (3) tanks are double-wall cryogenic tanks with an inter-wall vacuum.

4. Station according to claim 3, **characterised in that** the first (2) and second (3) tanks are housed in a common outer casing (12) under a vacuum.

5. Station according to any one of claims 1 to 4, **characterised in that** the second tank (3) is arranged above the first tank (2).

6. Station according to any one of claims 1 to 5, **characterised in that** the first tank (2) contains a fuel from among: natural gas, hydrogen.

7. Station according to any one of claims 1 to 6, **characterised in that** the second tank (2) contains a gas from among: nitrogen, argon.

8. Station according to any one of claims 1 to 7, **characterised in that** the circuit for withdrawing (7) the fluid from the second tank (3) comprises at least one portion of the cooling circuit and in particular one (14) of the pipes provided with a heat exchanger (10), i.e. the withdrawal circuit (7) is supplied with fluid by said pipe (7) of the cooling circuit (4, 14).

9. Station according to any one of claims 1 to 7, **characterised in that** the withdrawal circuit (7) comprises a stack (16) provided with a valve forming a vent in the case of determined overpressure within said circuit (7).

10. Method for storing a flammable fuel fluid in a filling station comprising a first cryogenic tank (2) storing flammable fuel in the form of a cryogenic liquid, a second cryogenic tank (3) storing an inert gas at a temperature less than the temperature of the fluid contained in the first tank (2), the station comprising a cooling circuit (4, 14) in thermal exchange with the first tank (2), the cooling circuit (4, 14) comprising an upstream end connected to the second cryogenic tank (3), the method comprising a step of drawing cryogenic fluid from the second cryogenic tank (3), a step of thermal exchange between this withdrawn fluid and the fluid contained in the first cryogenic tank (2) in order to reduce or suppress the vaporisation of the fluid in the first tank (2), the method being **characterised in that** it comprises a step of controlling the pressure and/or the temperature in the first tank (2) by distributing the withdrawn fluid in the second tank (3) in exchangers (9, 10) arranged respectively in the top and bottom portions of the first tank.

11. Method according to claim 10, **characterised in that** the fluids withdrawn from the second tank (3) and distributed in the two exchangers (9, 10) located in the top and bottom portions are separate, i.e. the fluid that circulates in one of the two exchangers (9, 10) comes directly from the second tank (3) without passing beforehand into the other exchanger (10, 9).
